# EUROPEAN PATENT SPECIFICATION

(11) **EP 3 388 258 B1**
(45) Date of publication and mention of the grant of the patent: **19.02.2020**
(21) Application number: 16873020.8
(22) Date of filing: 07.12.2016
(51) Int. Cl.: B60C 5/08, B60C 11/03, B60C 5/00, B60C 11/12, B60C 5/01, B60C 11/00

(54) **TIRE**
REIFEN
PNEUMATIQUE

(30) Priority: 07.12.2015 JP 2015238903; 07.12.2015 JP 2015238904
(43) Date of publication of application: 17.10.2018
(73) Proprietor: Bridgestone Corporation, Tokyo 104-8340 (JP)
(72) Inventor: KIWAKI, Yukihiro, Tokyo 104-8340 (JP)
(74) Representative: Oxley, Robin John George
(86) International application number: PCT/JP2016/086393
(87) International publication number: WO 2017/099127

(56) References cited:
- EP-A1- 2 468 489
- EP-A1- 2 554 402
- EP-A1- 2 614 967
- EP-A1- 2 789 479
- EP-A1- 2 792 503
- WO-A1-2011/122451
- WO-A1-2015/005171
- WO-A1-2015/156406
- JP-A- H03 143 701
- JP-A- 2008 081 097
- JP-A- 2009 073 313
- JP-A- 2010 274 857
- JP-A- 2013 078 997
- JP-A- 2013 252 746
- JP-A- 2014 097 725
- JP-A- 2014 162 295
- US-A1- 2014 238 566

## Description

### Technical Field

The present disclosure relates to a tire in which a tire frame member is formed using a resin material, and a rubber tread is provided on an outer circumference of the tire frame member.

### Background Art

Because of their light weight and easy recyclability, it has been proposed that thermoplastic resins and thermoplastic elastomers and the like be used as a material for tires. For example, in Japanese Unexamined Patent Application, First Application No. H3-143701, a pneumatic tire is disclosed in which the tire main body is molded using a thermoplastic polymer material. A tire according to the preamble of claim 1 is further known from EP 2 468 489 A1.

### SUMMARY OF THE INVENTION

### Technical Problem

Here, if an unvulcanized tire in which a high-rigidity belt that is formed containing a cord is disposed in the outer circumference of a tire frame member, and additionally, a tread formed from raw rubber is disposed at an outer circumferential side of this belt is loaded into a mold having rib-shaped projections formed on an inner circumferential surface thereof in order to mold lug grooves into this tread, and this unvulcanized tire is then molded, then the following problems give cause for concern.

Namely, when this tread is pressed against the inner circumferential surface of the mold, the pressing force applied to the tread by the projections is transmitted to the belt via the raw rubber of the tread, and there are cases in which, when viewed from a tire side surface, the belt is warped so as to curve towards an inner side in the tire radial direction, not just in the portions of the belt that face the projections, but over a wide extent on both sides in the tire circumferential direction.

If the belt is warped in this way over a wide extent in the tire circumferential direction, then outer circumferential portions of the tire frame member that are adjacent to the inner side in the tire radial direction of the belt also become warped in the tire circumferential direction, and there is a concern that this will cause vibrations in a running vehicle. If, on the other hand, a belt is not provided on the inner side of the tread, then only the portions of the tire frame member that face the projections are pressed in a localized way, and compared with when a belt is provided, there is a lesser vibration effect when a vehicle is running.

In consideration of the above-described circumstances, it is an object of an exemplary embodiment of the present invention to provide, in a tire in which a reinforcing layer and a tread that is formed from a rubber material are disposed at an outer circumferential side of a tire frame member formed using a resin material, a tire structure that enables a region where warping of outer circumferential portions of a tire frame member occurs to be reduced in the tire circumferential direction.

### Solution to the Problem

A tire according to a first aspect is provided with a tire frame member that is formed from a thermoplastic resin material, and that has side portions that extend towards an outer side in a tire radial direction from a bead portion, and a crown portion that extends towards an inner side in a tire width direction from the side portions, a reinforcing layer that is disposed at an outer side in the tire radial direction of the tire frame member, and that has a higher bending rigidity than outer circumferential portions of the tire frame member, a tread that is formed from a rubber material and is disposed at the outer side in the tire radial direction of the reinforcing layer, and a plurality of width direction grooves that are provided at the tread at intervals in the tire circumferential direction, and that extend in the tire width direction in which mutually facing groove wall surfaces of width direction grooves do not make contact with each other when the tread is in contact with the ground, wherein an aperture surface area of one of the width direction grooves within a total ground contact surface of the tread of one circumferential portion of the tire is 0.02% or less relative to a surface area of a total ground contact surface of the tread of one circumferential portion of the tire, the total ground contact surface being a surface area obtained by multiplying the ground contact width of the tread, measured as described herein, by the length in the circumferential direction of the tread of one circumferential portion of a tire.

In the tire according to the first aspect, when a reinforcing component is disposed at an outer circumference of a pre-molded tire frame member, and an unvulcanized rubber component that subsequently forms the tread is then disposed thereon, and vulcanization molding is then performed thereon in a mold, projections on the mold that form width direction grooves in the tread press against the unvulcanized rubber component, and pressing force that attempts to deform the reinforcing component towards the inner side in the tire radial direction is transmitted to the reinforcing component via the unvulcanized rubber.

However, in the tire described in claim 1, because the aperture surface area of a single width direction groove is 0.02% or less of the total ground contact surface of the tread of an entire circumferential portion of a tire, the extent of the warping of the reinforcing component can be reduced in the tire circumferential direction by the pressing force from the projections on the mold. As a result, it is possible to reduce the extent of warping in the tire circumferential direction of the tire frame member adjacent to the reinforcing component.

A tire according to a second aspect is the tire according to the first aspect in which, in the region of the tread where the reinforcing layer is disposed, in a width direction groove placement region which is obtained when all of the plurality of width direction grooves that are provided at intervals from each other in the tire circumferential direction project in the tire circumferential direction, an aperture surface area that is occupied by a single width direction groove is 1.5% or less of the surface area of this width direction groove placement region.

In the tire according to the second aspect, in the region of the tread where the reinforcing layer is disposed, in a width direction groove placement region which is obtained when all of the plurality of width direction grooves that are provided at intervals from each other in the tire circumferential direction project in the tire circumferential direction, because an aperture surface area that is occupied by a single width direction groove is 1.5% or less of a surface area of the width direction groove placement region, it is possible to reduce even further the extent of warping of the tire frame member in the tire circumferential direction.

A tire according to a third aspect is the tire according to the first aspect or second aspect in which an angle of a groove width center line of the width direction grooves is 45° or less relative to the tire width direction.

The width direction grooves in which the angle of the groove width center line relative to the tire width direction is 45° or less enable rigidity in the tire width direction of land portions between one width direction groove and another width direction groove to be secured, and also enable water drainage in the tire width direction to be improved.

A tire according to a fourth aspect is the tire according to any one of the first through third aspects in which, within a ground contact surface of the tread, a minimum value of a length of the width direction grooves, as measured in a direction extending in the tire width direction, is 1.5% relative to a ground contact width of the tread.

Within the ground contact surface of the tread, by setting the minimum value of the length of the width direction grooves, as measured in a direction extending in the tire width direction, to 1.5% relative to the ground contact width of the tread, it is possible to ensure a water drainage performance in the tire width direction in peripheral regions relative to the width direction grooves in the tread. Note that in order to prevent deformation of the tire frame member from extending over a wide range, it is preferable that the maximum value of the length of the width direction grooves, as measured in a direction extending in the tire width direction, be 20% relative to the ground contact width of the tread.

A tire according to a fifth aspect is the tire according to any one of the first through fourth aspects in which there are provided a tire frame member that is formed from a resin material and has side portions that extend towards an outer side in a tire radial direction from a bead portion, and a crown portion that extends towards an inner side in a tire width direction from the side portions, a tread that is formed from a rubber material and is disposed at the outer side in the tire radial direction of the tire frame member, a plurality of land portions that are provided at the tread and are that partitioned by main grooves that extend in the tire circumferential direction, and reduced compression rigidity portions that are provided as recessed portions in the land portions, and that cause a compression rigidity of the land portions to be reduced.

In the tire according to the fifth aspect, by providing reduced compression rigidity portions in the form of recessed portions in the land portions, it is possible to reduce the compression rigidity in the land portions. As a result, vibration in the land portions can be prevented from being transmitted to the vehicle.

A tire according to a sixth aspect is the tire according to the fifth aspect in which the plurality of land portions are provided with a shoulder rib that is positioned at an outermost side in a vehicle width direction when the tire is fitted onto a vehicle, and that extends in the tire circumferential direction, and a plurality of lug grooves that extend in the tire width direction are provided at intervals in the tire circumferential direction in the shoulder rib, and the reduced compression rigidity portions are provided between one of the lug grooves and another of the lug grooves in the shoulder rib.

In the tire according to the sixth aspect, because reduced compression rigidity portions are provided at the land portions between one lug groove and another lug groove of a shoulder rib, the compression rigidity in the land portions between the one lug groove and the other lug groove of a shoulder rib can be reduced. Because of this, for example, during cornering, which is when a considerable load is applied to a shoulder rib, vibration in the land portions can be prevented from being transmitted to the vehicle.

A tire according to a seventh aspect is the tire according to the sixth aspect in which the reduced compression rigidity portions that are formed in the shoulder rib are hole-shaped pin sipes, and a plurality of reduced compression rigidity portions are formed extending along the lug grooves, and whose maximum radial dimension is smaller than a minimum groove width dimension of the main grooves and a minimum groove width dimension of the lug grooves.

In the tire according to the seventh aspect, by forming hole-shaped pin sipes in the land portions between one lug groove and another lug groove, the compression rigidity of the land portions between one lug groove and another lug groove can be reduced. Note that if sipes are formed that cut right across a shoulder rib, the compression rigidity can be reduced, however, the rigidity of the shoulder rib in the tire circumferential direction, as well as the rigidity thereof in the tire width direction are also reduced. In contrast, because hole-shaped pin sipes do not cut right across a shoulder rib, the compression rigidity can be reduced without this having any substantial effect on the rigidity in the tire circumferential direction or the rigidity in the tire width direction.

A tire according to an eighth aspect is the tire according to the sixth aspect or the seventh aspect in which the plurality of land portions are provided with an outer side second rib that extends in the tire circumferential direction adjacently to an inner side in the vehicle width direction when the tire is fitted onto a vehicle, and a plurality of non-transverse sipes that are formed so as to include a pair of width direction sipe portions that extend towards an inner side in the vehicle width direction from a main groove between the shoulder rib and the outer side second rib and terminate within the rib, and a circumferential direction sipe portion that joins together end portions on the inner side in the vehicle width direction of the pair of width direction sipe portions are provided at intervals in the tire circumferential direction in the outer side second rib, and the reduced compression rigidity portions that are provided between one of the non-transverse sipes and another one of the non-transverse sipes are shallow grooves whose groove depth is shallower than that of the main grooves, and whose two end portions terminate within a rib.

In the tire according to the eighth aspect, by forming non-transverse sipes in an outer side second rib that do not cut right cross the outer side second rib, the rigidity of the outer side second rib in the tire circumferential direction, as well as the rigidity thereof in the tire width direction can be moderately reduced.

Additionally, because shallow grooves whose groove depth is shallower than that of the main grooves and whose two end portions terminate within a rib are formed as reduced compression rigidity portions between one non-transverse sipe and another non-transverse sipe in an outer side second rib, it is possible to reduce the compression rigidity of the land portions between the one non-transverse sipe and the other non-transverse sipe in the outer side second rib.

### Advantageous Effects of the Invention

As is described above, according to the tire according to the present exemplary embodiment, the excellent effect is achieved that it is possible to reduce the extent of warping of a tire frame member in the tire circumferential direction.

### BRIEF DESCRIPTION OF THE DRAWINGS

FIG. 1 is a plan view showing a tread of a tire according to an exemplary embodiment of the present disclosure.
FIG. 2 is a cross-sectional view showing an outer side in a vehicle width direction when a tire is fitted onto a vehicle sandwiching a tire equatorial plane of a tire according to an exemplary embodiment of the present disclosure.
FIG. 3 is a cross-sectional view showing an inner side in a vehicle width direction when a tire is fitted onto a vehicle sandwiching a tire equatorial plane of a tire according to an exemplary embodiment of the present disclosure.
FIG. 4 is a cross-sectional view showing a first width direction groove taken in a perpendicular direction relative to a longitudinal direction of the first width direction groove.
FIG. 5 is a cross-sectional view showing a pin sipe.
FIG. 6 is a cross-sectional view showing a shallow groove taken in a perpendicular direction relative to the longitudinal direction of the shallow groove.
FIG. 7 is a cross-sectional view showing a shallow groove taken in a perpendicular direction relative to the longitudinal direction of the shallow groove.
FIG. 8 is a cross-sectional view taken in a perpendicular direction relative to the longitudinal direction showing a first inclined groove.
FIG. 9 is a cross-sectional view taken in a perpendicular direction relative to the longitudinal direction showing a second inclined groove.
FIG. 10 is a cross-sectional view taken in a perpendicular direction relative to the longitudinal direction showing a shallow groove.
FIG. 11 is a cross-sectional view taken in a perpendicular direction relative to the longitudinal direction showing the second inclined groove and a shallow groove.
FIG. 12 is a cross-sectional view taken in a perpendicular direction relative to the longitudinal direction showing a narrow groove.
FIG. 13 is a cross-sectional view taken in a perpendicular direction relative to the longitudinal direction showing an inner side width direction groove.

### DESCRIPTION OF THE EMBODIMENTS

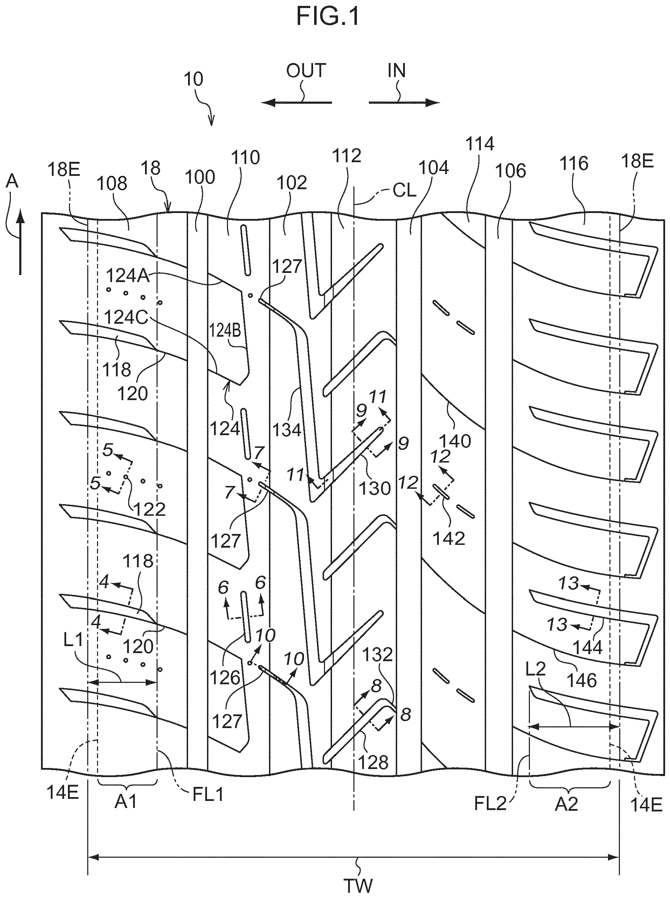

A tire 10 according to an exemplary embodiment of a tire of the present disclosure will now be described in accordance with FIG. 1 through FIG. 13. Note that an arrow W in the drawings indicates a direction which is parallel to a tire axial direction (hereinafter, referred to as a tire width direction), and an arrow R indicates a direction that passes through the rotation axis of a tire and is perpendicular to the tire width direction (hereinafter, referred to as a tire radial direction). Furthermore, an arrow A indicates a rotation direction of a tire (hereinafter, referred to as a tire circumferential direction). Additionally, a radial direction refers to a perpendicular direction relative to the tire circumferential direction, and indicates a direction that includes both the tire radial direction and the tire width direction. Note that the tire 10 of the present exemplary embodiment is intended for use on a passenger vehicle, and the tire size of the tire 10 is PSR245/35R21.

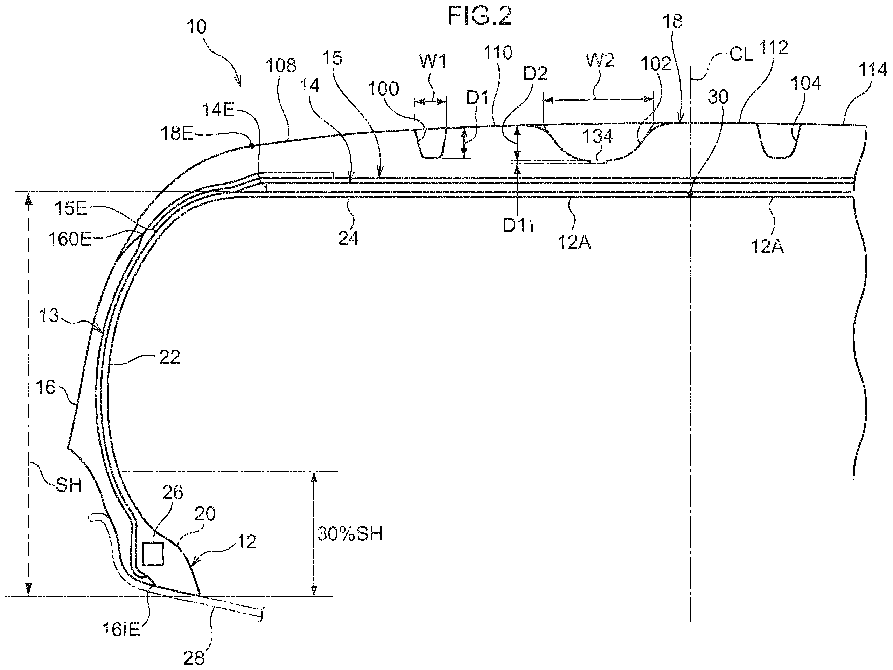

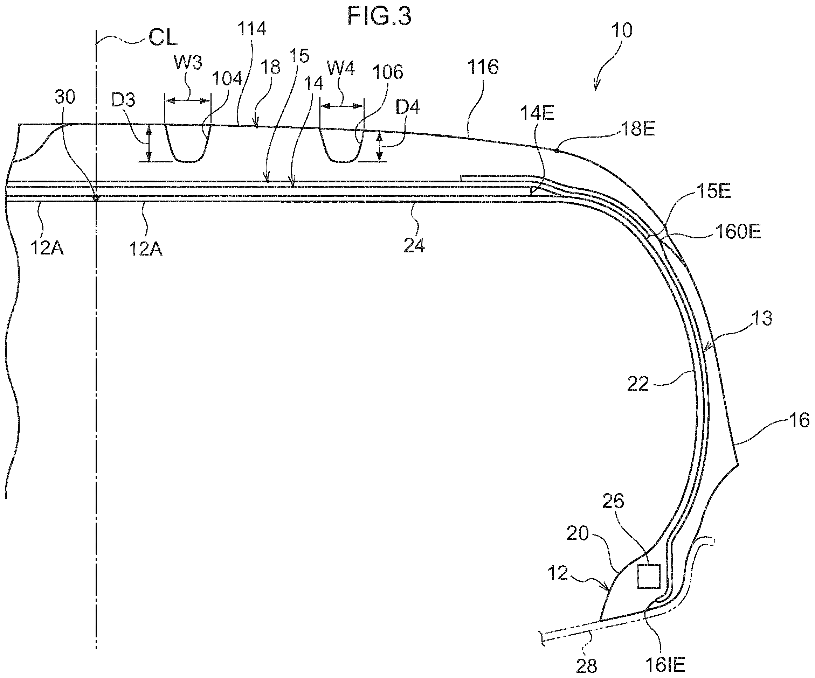

As is shown in FIG. 2 and FIG. 3, the tire 10 according to the present exemplary embodiment is provided with a tire frame member 12, a side reinforcing layer 13, a belt layer 14, a belt upper reinforcing layer 15, side treads 16, and a top tread 18.

### (Tire Frame Member)

The tire frame member 12 is molded using a resin material, and is formed in a toroidal shape by bonding together a pair of tire pieces 12A in the tire axial direction at a tire equatorial plane CL. Note that it is also possible for the tire frame member 12 to be formed by bonding together three or more tire pieces 12A.

The tire frame member 12 has a pair of bead portions 20, a pair of side portions 22 that extend towards an outer side in the tire radial direction respectively from the pair of bead portions 20, and a crown portion 24 that extends towards an inner side in the tire width direction from the side portions 22.

Note that the bead portion 20 is a portion of the tire frame member 12 of the present exemplary embodiment extending from an inner side end in the tire radial direction of the tire frame member 12 as far as 30% of a cross-sectional height SH, while the crown portion 24 is a portion thereof where the top tread 18 is disposed.

A thermoplastic resin having an equivalent elasticity to rubber is used as the resin material forming at least a portion of the tire frame member 12, optionally with a thermoplastic elastomer (TPE), or a thermosetting resin or the like. Note that it is possible for the entire tire frame member 12 to be formed from the above-described resin material, or for only a portion thereof to be formed from the above-described resin material.

Examples of a thermoplastic elastomer include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamically cross-linked thermoplastic elastomer (TPV), and the like.

Examples of a thermoplastic resin include polyurethane resin, polyolefin resin, vinyl chloride resin, and polyamide resin and the like. Furthermore, as the thermosetting material it is also possible to use materials having, for example, a deflection temperature under load (under a load of 0.45 MPa) as stipulated in ISO75-2 or ASTM D648 of 78°C or more, a tensile yield strength as stipulated in JIS K7113 of 10 MPa or more, a tensile elongation at break (JIS K7113) as stipulated in the same JIS K7113 of 50 % or more, and a Vicat softening temperature (method A) as stipulated in JIS K7206 of 130°C or more.

A bead core 26 is embedded in the bead portion 20 of the tire frame member 12. Metal, organic fibers, or organic fibers covered by resin, or alternatively, a hard resin or the like can be used as the material forming the bead core 26. Note that it is also possible to omit the bead core 26 provided that the rigidity of the bead portion 20 is ensured and there are no problems when the bead portion 20 is engaged with a rim 28.

A bonding component 30 made from resin is provided between the pair of tire pieces 12A of the tire frame member 12 in a central portion in the tire width direction of the crown portion 24, in other words, on the tire equatorial plane CL. The bonding component 30 is formed in a substantially trapezoidal shape when looked at in a cross-sectional view, and the pair of tire pieces 12A are joined to each other by bonding the tire pieces 12A together at both side surfaces of the bonding component 30.

Note that a thermoplastic material or molten resin of the same type as the tire pieces 12A, or of a different type therefrom can be used for the bonding component 30. Moreover, the tire pieces 12A can also be joined together without using the bonding component 30.

In this case, a hot plate welding method in which, for example, a hot plate is sandwiched between end portions of the tire pieces 12A, and the hot plate is then removed at the same time as the end portions are pressed in a direction approaching each other so that the tire pieces 12A are welded together, or a method in which the tire pieces 12A are adhered together using an adhesive agent can be used.

### (Belt Layer)

The belt layer 14 is provided on an outer circumferential surface of the crown portion 24. This belt layer 24 is formed, for example, by winding a resin-coated cord in a spiral configuration in the tire circumferential direction. In the present exemplary embodiment, a steel cord is used as the cord used in the belt layer 14.

### (Belt Upper Reinforcing Layer)

The belt upper reinforcing layer 15 that covers the belt layer 14 is disposed at the outer side in the tire radial direction of the belt layer 14. The belt upper reinforcing layer 15 extends from the tire equatorial plane CL side beyond an end portion 14E of the belt layer 14 towards the outer side in the tire width direction, and terminates in a vicinity of a boundary between the side portions 22 and the crown portion 24.

The belt upper reinforcing layer 15 is provided with plural reinforcing cords that are coated with rubber. The reinforcing cords of the belt upper reinforcing layer 15 are formed by an organic fiber monofilament (i.e., a single wire), or a multifilament formed by twisting organic fibers (i.e., a stranded wire), and extend in the tire width direction in parallel rows in the tire circumferential direction. Note that the reinforcing cords of the belt upper reinforcing layer 15 may also be inclined at an angle of 10° or less relative to the tire width direction.

A material such as nylon, PET, glass, or amide or the like can be used for the organic fibers. Note that it is also possible for a metal such as steel or the like to be used for the material of the reinforcing cords. Additionally, the reinforcing cords of the belt upper reinforcing layer 15 may be coated in resin instead of rubber.

### (Side Reinforcing Layer)

The side reinforcing layer 13 is disposed at the tire outer side surface side of the tire frame member 12. The side reinforcing layer 13 extends from the inner side in the tire radial direction of the bead core 26 towards the outer side in the tire radial direction along an outer surface of the tire frame member 12. The side reinforcing layer 13 then extends further towards the tire equatorial plane CL side along the outer surface of the belt upper reinforcing layer 15, and extends beyond an end portion 15E of the belt upper reinforcing layer 15 and an end portion 14E of the belt layer 14, and terminates in the vicinity of the end portion 14E of the belt layer 14.

The side reinforcing layer 13 is provided with plural reinforcing cords that are coated with rubber. The reinforcing cords of the side reinforcing layer 13 are formed by an organic fiber monofilament (i.e., a single wire), or a multifilament formed by twisting organic fibers (i.e., a stranded wire), and extend respectively in the radial direction (i.e., in the tire radial direction) in parallel rows in the tire circumferential direction. Note that the reinforcing cords of the side reinforcing layer 13 may also be inclined at an angle of 10° or less relative to the tire radial direction.

A material such as nylon, PET, glass, or amide or the like can be used for the organic fibers. Note that it is also possible for a metal such as steel or the like to be used for the material of the reinforcing cords 34. Additionally, the reinforcing cords of the side reinforcing layers 13 may be coated in resin instead of rubber.

### (Side Treads)

The pair of side treads 16 are provided on the outer circumferential surface of the side reinforcing layer 13 so as to extend from the bead portion 20 of the tire frame member 12 as far as the outer side in the tire width direction of the crown portion 24. The same type of rubber as that used for the side walls of conventional rubber pneumatic tires can be used for the side treads 16.

Note that an end portion 16IE on the inner side in the tire radial direction of the side treads 16 extends as far as an inner circumferential surface of the bead portion 20 of the tire frame member 12, more specifically, as far as the inner side in the tire radial direction of the bead core 26. Moreover, an end portion 16OE on the outer side in the tire radial direction of the side treads 16 is positioned in the vicinity of the end portion 15E of the belt upper reinforcing layer 15.

### (Top Tread)

The top tread 18 which is serving as a tread is disposed at the outer side in the tire radial direction of the belt upper reinforcing layer 15. The top tread 18 is formed from rubber having superior abrasion resistance compared to the resin material forming the tire frame member 12, and the same type of tread rubber as that used in conventional rubber pneumatic tires can be used for the top tread 18.

As is shown in FIG. 1, a first circumferential direction groove 100, a second circumferential direction groove 102, a third circumferential direction groove 104, and a fourth circumferential direction groove 106 are formed extending continuously in the tire circumferential direction (i.e., in the direction of the arrow A, and in an opposite direction to the direction of the arrow A) in that sequence from an outer side in a vehicle width direction (i.e., on the side indicated by an arrow OUT) when the tire 10 of the present exemplary embodiment is fitted onto a vehicle towards an inner side in the vehicle width direction (i.e., on the side indicated by an arrow IN) in a running surface of the top tread 18. The first circumferential direction groove 100, the second circumferential direction groove 102, the third circumferential direction groove 104, and the fourth circumferential direction groove 106 correspond to the main grooves of the present disclosure.

As is shown in FIG. 2, a cross-section taken in a perpendicular direction relative to the longitudinal direction of the first circumferential direction groove 100 exhibits a substantially U-shaped configuration. The first circumferential direction groove 100 has a groove width W1 of 8.2 mm, and a groove depth D1 of 7.8 mm.

As is shown in FIG. 2, a cross-section taken in a perpendicular direction relative to the longitudinal direction of the second circumferential direction groove 102 exhibits a substantially semicircular configuration. The second circumferential direction groove 102 has a groove width W2 of 25 mm, and a groove depth D2 of 8.3 mm.

As is shown in FIG. 3, a cross-section taken in a perpendicular direction relative to the longitudinal direction of the third circumferential direction groove 104 exhibits a substantially U-shaped configuration. The third circumferential direction groove 104 has a groove width W3 of 10.5 mm, and a groove depth D3 of 8.3 mm.

As is shown in FIG. 3, a cross-section taken in a perpendicular direction relative to the longitudinal direction of the fourth circumferential direction groove 106 exhibits a substantially U-shaped configuration. The fourth circumferential direction groove 106 has a groove width W4 of 10.5 mm, and a groove depth D4 of 7.8 mm.

As is shown in FIG. 1, an outer side shoulder rib 108 is partitioned on the outer side in the vehicle width direction of the first circumferential direction groove 100 in the top tread 18, and an outer side second rib 110 is partitioned by the first circumferential direction groove 100 and the second circumferential direction groove 102 on the inner side in the vehicle width direction of the outer side shoulder rib 108, and a center rib 112 is partitioned by the second circumferential direction groove 102 and the third circumferential direction groove 104 on the inner side in the vehicle width direction of the outer side second rib 110. Note that the tire equatorial plane CL pass through the center rib 112.

Additionally, an inner side second rib 114 is partitioned by the third circumferential direction groove 104 and the fourth circumferential direction groove 106 on the inner side in the vehicle width direction of the center rib 112, and an inner side shoulder rib 116 is partitioned by the fourth circumferential direction groove 106 on the inner side in the vehicle width direction of the inner side second rib 114.

The outer side shoulder rib 108, the outer side second rib 110, the center rib 112, the inner side second rib 114, and the inner side shoulder rib 1116 correspond to the land portions of the present disclosure.

### (Outer Side Shoulder Rib)

Plural first width direction grooves 118 are formed at intervals in the tire circumferential direction on the outer side in the vehicle width direction in the outer side shoulder rib 108, and plural sipes 120 are formed at intervals in the tire circumferential direction on the inner side in the vehicle width direction in the outer side shoulder rib 108. The first width direction grooves 118 and the sipes 120 are disposed on a straight line, and are joined together in the vicinity of the center in the tire width direction of the outer side shoulder rib 108.

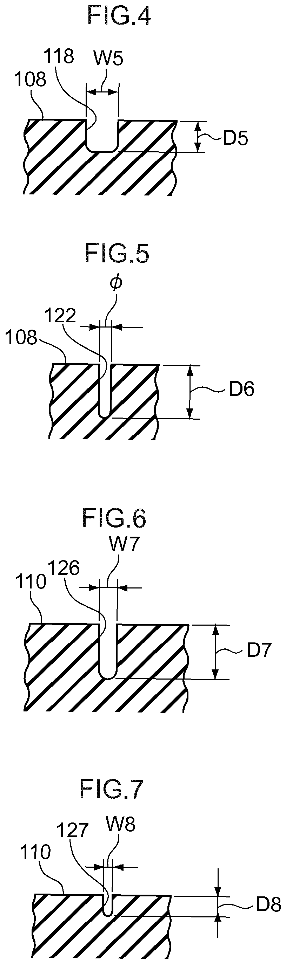

As is shown in FIG. 4, a cross-section in a perpendicular direction relative to the longitudinal direction of the first width direction grooves 118 exhibits a substantially U-shaped configuration. When the tire 10 is fitted onto a vehicle, the first width direction grooves 118 have a sufficiently wide groove width such that they do not close up when the top tread 18 is in contact with the road surface, in other words, such that one groove wall surface and another groove wall surface that are mutually facing each other do not come into mutual contact with each other. In contrast, the sipes 120 have a narrower groove width such that they do close up when the top tread 18 is in contact with the road surface, in other words, such that one groove wall surface and another groove wall surface that are mutually facing each other do come into mutual contact with each other. A groove depth D5 of the first width direction grooves 118 is shallower than the groove depths of the first circumferential direction groove 100, the second circumferential direction groove 102, the third circumferential direction groove 104, and the fourth circumferential direction groove 106.

As is shown in FIG. 1, the sipes 120 extend from the first circumferential direction groove 100 towards an outer side in the vehicle width direction, and terminate within the rib, while the first width direction grooves 118 extend from an end portion on the outer side in the vehicle width direction of the sipes 120 towards an outer side in the vehicle width direction, and terminate at a position beyond a ground contact end 18E. The sipes 120 are formed shallower than the first circumferential direction groove 100, the second circumferential direction groove 102, the third circumferential direction groove 104, and the fourth circumferential direction groove 106.

Note that the ground contact end 18E of the top tread 18 is measured when the tire 10 is fitted onto a standard rim as stipulated in the JATMA YEAR BOOK (Japan Automobile Tyre Manufacturers Association, Inc., 2015 edition), and is filled to an internal pressure of 100% of the air pressure (i.e., to the maximum air pressure) that corresponds to the maximum load capability at the applicable size/ply rating as per the JATMA YEAR BOOK (i.e., the load depicted in bold type in the Internal Pressure - Corresponding Load Capability Table), and when a load is applied to this maximum load capability. At the place of use or at the place of manufacture, the tire conforms to the respective Standards when TRA Standards or ETRTO Standards are being applied. Moreover, a ground contact width TW is a dimension measured from one ground contact end 18E to the other ground contact end 18E in the tire width direction. Note that the ground contact width TW of the top tread 18 of the present exemplary embodiment is 216 mm. The portion of the top tread 18 between the one ground contact end 18E and the other ground contact end 18E that is in actual contact with the road surface is called the ground contact surface.

Here, when the circumferential direction of the tire 10 is taken as the direction of the arrow A, and as the opposite direction to the direction of the arrow A, the end portions on the outer side in the vehicle width direction of the first width direction grooves 118 and sipes 120 of the present exemplary embodiment are inclined so as to be aligned more closely with the direction of the arrow A than are the end portions thereof on the inner side in the vehicle width direction. In other words, the first width direction grooves 118 and sipes 120 slope upwards on the left side thereof when looked at in a tread plan view. Note that in the present exemplary embodiment, a groove width center line of the first width direction grooves 118 and a groove width center line of the sipes 120 are inclined at an angle of 45° or less relative to the tire width direction.

Here, an aperture surface area of one first width direction groove 118 is 0.02% or less relative to the total ground contact surface of the top tread 18 of one circumferential portion of a tire, namely, relative to the surface area of a tire outer circumferential surface between one ground contact end 18E and the other ground contact end 18E, which is the surface area of the outer circumferential surface of a tread 18 that is capable of being in contact with the road surface, in other words, relative to a surface area obtained by multiplying the ground contact width TW of the top tread 18 by the length in the circumferential direction (in other words, the circumferential length) of the top tread 18 of one circumferential portion of a tire (in other words, of an entire tire circumference).

Note that the aperture surface area of a single first width direction groove 118 is 1.5% or less relative to the surface area of the ground contact surface (i.e., the ground contact surface area) of the top tread 18, in other words, relative to the surface area of the portion of the top tread 18 that is in actual contact with the road surface.

Furthermore, in the region where the belt layer 14 is disposed, in other words, in a region between one end portion 14E in the tire width direction of the belt layer 14 and the other end portion 14E thereof, it is preferable that an aperture surface area that is occupied by a single first width direction groove 118 out of the surface area of a region obtained when all of the first width direction grooves 118 project in the tire circumferential direction, in other words, of a first width direction groove placement region A1 which is between an end portion 14E of the belt layer 14 and a virtual line FL1 extending in the tire circumferential direction and passing through an end portion of that particular first width direction groove 118 out of all of the first width direction grooves 118 that is positioned closest to the tire equatorial plane CL side (i.e., a length on the outer circumferential surface of the top tread 18 measured in the tire width direction from an end portion 14E of the belt layer 14 to an end portion on the tire equatorial plane CL side of the first width direction groove 118 multiplied by a length in the tire circumferential direction of the outer circumferential surface of the top tread 18 (in other words, the circumferential length)) is not more than 1.5%.

Note that the aperture surface area occupied by a single first width direction groove 118 out of the surface area of the first width direction groove placement region A1 of the ground contact surface of the top tread 18 is 5% or less.

Moreover, within the range of the ground contact width TW of the top tread 18, it is preferable that a length L1 of the first width direction grooves 118, as measured in the tire width direction, be set within a range of 5 to 20% relative to the ground contact width TW.

It is also preferable that a ratio of the groove width of the first width direction grooves 118 (i.e., an average value thereof) relative to the pitch of the first width direction grooves 118 in the tire circumferential direction, in other words, a ratio of the groove width of the first width direction grooves 118 (i.e., an average value thereof) relative to a distance measured in the tire circumferential direction between a groove width center line of one first width direction groove 118 and a groove width center line of another first width direction groove 118 that are mutually adjacent to each other in the tire circumferential direction is within a range of 8 to 15%.

Furthermore, plural pin sipes 122 having the cross-sectional configuration shown in FIG. 5 are provided at the outer side shoulder rib 108 in a central portion between one first width direction groove 118 and another first width direction groove 118. The pin sipes 122 are small-diameter holes having circular aperture portions, and are formed having a sufficiently large diameter that wall surfaces thereof do not come into mutual contact when the top tread 18 is in contact with the ground. The plural pin sipes 122 are disposed apart from each other in parallel with the first width direction grooves 118.

The pin sipes 122 are portions where the compression rigidity of the outer side shoulder rib 108 is reduced, and the compression rigidity of the block-shaped portions between a first width direction groove 118 and a first width direction groove 118 of the outer side shoulder rib 108 is reduced. The compression rigidity referred to here means the amount of squashing when a tire is in contact with the road surface and compression force is being applied thereto.

A diameter ϕ of the pin sipes 122 is preferably within a range of 1 to 2 mm. A depth D6 of the pin sipes 122 is preferably within a range of 20 to 100% of the groove depth D1 of the first circumferential direction groove 100 that partitions the outer side shoulder rib 108. In the tire 10 of the present exemplary embodiment, the actual dimension of the depth D6 of the pin sipes 122 is preferably within a range of 1 to 4 mm.

### (Outer Side Second Rib)

As is shown in FIG. 1, non-transverse sipes 124, shallow grooves 126, and shallow grooves 127 are disposed alternatingly in the tire circumferential direction in the outer side second rib 110.

The non-transverse sipes 124 are formed substantially in a U-shape when looked at in a top tread plan view, and are provided with a first width direction sipe portion 124A that extends from the first circumferential direction groove 100 towards the inner side in the vehicle width direction and terminates within the rib, a circumferential direction sipe portion 124B that extends from the terminal portion within the rib of the first width direction sipe portion 124A in the opposite direction from the tire rotation direction, and a second width direction sipe portion 124C that extends from an end portion of the circumferential direction sipe portion 124B on the opposite side from the first width direction sipe portion 124A side and connects to the first circumferential groove 100.

Note that the first width direction sipe portion 124A and the second width direction sipe portion 124C are slightly inclined relative to the tire width direction such that end portions thereof that are on the outer side in the vehicle width direction are positioned closer to the side in the direction indicated by the arrow A than are end portions thereof that are on the inner side in the vehicle width direction. In other words, the first width direction sipe portion 124A and the second width direction sipe portion 124C slope upwards on the left side thereof when looked at in a top tread plan view.

Additionally, the circumferential direction sipe portion 124B is slightly inclined relative to the tire circumferential direction such that an end portion thereof on the side in the direction indicated by the arrow A is closer to the outer side in the vehicle width direction than an end portion thereof on the opposite side from the side in the direction indicated by the arrow A. In other words, the circumferential direction sipe portion 124B slopes upwards on the left side thereof when looked at in a top tread plan view. The first width direction sipe portions 124A and the second width direction sipe portions 124C are all placed on a virtual extension of the sipes 120 that are provided at the outer side shoulder rib 108.

In this manner, the non-transverse sipes 124 are formed such that they do not cut right across the outer side second rib 110 in the tire width direction so that the rigidity in the tire circumferential direction of the outer side second rib 110 is not overly reduced. Note that the non-transverse sipes 124 have a narrow groove width that causes them to close up when the top tread 18 is in contact with the road surface, in other words, a groove width that causes one groove wall surface and another groove wall surface that are mutually facing each other to come into mutual contact with each other. Moreover, the non-transverse sipes 124 of the present exemplary embodiment are formed shallower than the first circumferential direction groove 100, the second circumferential direction groove 102, the third circumferential direction groove 104, and the fourth circumferential direction groove 106.

The shallow grooves 126 are formed slightly on the inner side in the vehicle width direction than the center portion in the vehicle width direction of the outer side second rib 110. The shallow grooves 126 extend rectilinearly at a slight inclination relative to the tire circumferential direction such that an end portion thereof on the side in the direction indicated by the arrow A is closer to the outer side in the vehicle width direction than an end portion thereof on an opposite side from the side in the direction indicated by the arrow A, and both end portions in the longitudinal direction of the shallow grooves 126 terminate within the rib.

As is shown in FIG. 6, a cross-section taken in a perpendicular direction relative to the longitudinal direction of the shallow grooves 126 exhibits a substantially U-shaped configuration. The shallow grooves 126 have a narrower groove width than the first circumferential direction groove 100, the second circumferential direction groove 102, the third circumferential direction groove 104, and the fourth circumferential direction groove 106, and it is preferable that the shallow grooves 126 have a sufficiently wide groove width that they do not close up when the top tread 18 is in contact with the ground, in other words, have a sufficiently wide groove width that one groove wall surface and another groove wall surface that are mutually facing each other do not come into mutual contact with each other.

A groove depth D7 of the shallow grooves 126 is preferably formed shallower than the groove depths of the first circumferential direction groove 100, the second circumferential direction groove 102, the third circumferential direction groove 104, and the fourth circumferential direction groove 106. The shallow grooves 126 of the present exemplary embodiment have a length of 20 mm, a groove width of 2 mm, and a groove depth of 6.5 mm.

The shallow grooves 126 are portions where the compression rigidity of the outer side second rib 110 is reduced, and the compression rigidity of the block-shaped portions between one non-transverse sipe 124 and another non-transverse sipe 124 of the outer side second rib 110 is reduced.

The shallow grooves 127 are formed on the second circumferential direction groove 102 side of the outer side second rib 110, and are placed on a virtual extension of the first width direction sipe portions 124A. As is shown in FIG. 7, a cross-section taken in a perpendicular direction relative to the longitudinal direction of the shallow grooves 127 exhibits a substantially U-shaped configuration. A groove width W8 of the shallow grooves 127 is formed narrower than that of the shallow grooves 126, while a groove depth D8 thereof is formed shallower than that of the shallow grooves 126. The groove width W8 of the shallow grooves 127 of the present exemplary embodiment is 1 mm, while the groove depth D8 thereof is 2 mm. Note that the shallow grooves 127 are joined to shallow grooves 134 that are formed in a groove wall of the second circumferential direction groove 102 (described below).

### (Center Rib)

First inclined grooves 128 and second inclined grooves 130 are disposed alternatingly at intervals in the tire circumferential direction in the center rib 11.

The first inclined grooves 128 extend from the second circumferential direction groove 102 at an inclination relative to the tire width direction towards the third circumferential direction groove 104, and are connected to the third circumferential direction groove 104 via short grooves 132 (described below).

The first inclined grooves 128 are inclined relative to the tire width direction such that an end portion thereof on the inner side in the vehicle width direction is closer to the side in the direction indicated by the arrow A than an end portion thereof on the outer side in the vehicle width direction. In other words, the first inclined grooves 128 slope upwards on the right side thereof when looked at in a top tread plan view. Note that the angle of inclination of the first inclined grooves 128 relative to the tire width direction is substantially 45°.

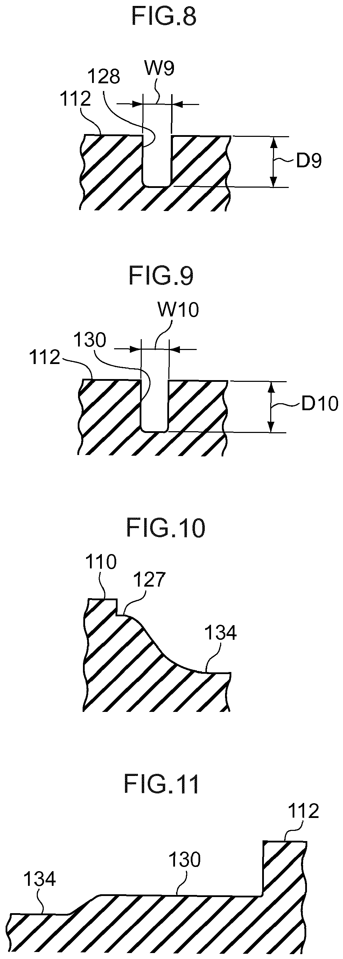

As is shown in FIG. 8, a cross-section taken in a perpendicular direction relative to the longitudinal direction of the first inclined grooves 128 exhibits a substantially U-shaped configuration. A groove width W9 of the first inclined grooves 128 is narrower than that of the first circumferential direction groove 100, the second circumferential direction groove 102, the third circumferential direction groove 104, and the fourth circumferential direction groove 106, and the first inclined grooves 128 have a sufficiently wide groove width that they do not close up when the top tread 18 is in contact with the ground, in other words, have a sufficiently wide groove width that one groove wall surface and another groove wall surface that are mutually facing each other do not come into mutual contact with each other. The groove width W9 of the first inclined grooves 128 of the present exemplary embodiment is 3.2 mm, while a groove depth D9 thereof is 6.5 mm.

The short grooves 132 that extend from an end portion on the inner side in the vehicle width direction of the first inclined groves 128 towards the third circumferential groove 104, and connect to the third circumferential groove 104 are formed in the center rib 112. The short grooves 132 are inclined in the opposite direction from the first inclined grooves 128 relative to the tire width direction. In other words, the short grooves 132 slope upwards on the left side thereof when looked at in a top tread plan view. The short grooves 132 are formed having the same groove depth as the first inclined grooves 128. The groove width of the short grooves 132 is formed narrower than that of the first inclined grooves 128, however, they have a sufficiently wide groove width that they do not close up when the top tread 18 is in contact with the ground, in other words, have a sufficiently wide groove width that one groove wall surface and another groove wall surface that are mutually facing each other do not come into mutual contact with each other.

The second inclined grooves 130 extend from the second circumferential groove 102 on an inclination towards the inner side in the vehicle width direction, and terminate in the vicinity of the third circumferential direction groove 104 within the rib of the center rib 112. The second inclined grooves 130 are inclined relative to the tire width direction such that an end portion thereof on the inner side in the vehicle width direction is closer to the side in the direction indicated by the arrow A than an end portion thereof on the outer side in the vehicle width direction. In other words, the second inclined grooves 130 slope upwards on the right side thereof when looked at in a top tread plan view, so as to be in parallel with the first inclined grooves 128.

As is shown in FIG. 9, a cross-section taken in a perpendicular direction relative to the longitudinal direction of the second inclined grooves 130 exhibits a substantially U-shaped configuration. A groove width W10 of the second inclined grooves 130 is narrower than that of the first circumferential direction groove 100, the second circumferential direction groove 102, the third circumferential direction groove 104, and the fourth circumferential direction groove 106, and the second inclined grooves 130 have a sufficiently wide groove width that they do not close up when the top tread 18 is in contact with the ground, in other words, have a sufficiently wide groove width that one groove wall surface and another groove wall surface that are mutually facing each other do not come into mutual contact with each other. The groove width W10 of the second inclined grooves 130 of the present exemplary embodiment is 3.4 mm, while a groove depth D10 thereof is 6.5 mm.

As is shown in FIG. 1 and FIG. 2, the shallow grooves 134 that join the shallow grooves 127 in the outer side second rib 110 to the second inclined grooves 130 of the center rib 112 are formed in the groove wall of the second circumferential direction groove 102. End portions on the side of the shallow grooves 134 that are joined to the shallow grooves 127 are inclined at a comparatively small angle of 45° or less relative to the tire circumferential direction, and are consequently positioned further to the outer side in the vehicle width direction than end portions on the side of the shallow grooves 134 that are joined to the second inclined grooves 130.

As is shown in FIG. 2, a groove depth D11 of the shallow grooves 134, which is measured using the groove walls of the second circumferential groove 102 as a reference, is 0.5 mm. Note that, as is shown in FIG. 10, groove bottoms of the shallow grooves 134 and the shallow grooves 127 are joined together, and, as is shown in FIG. 11, groove bottoms of the shallow grooves 134 and the second inclined grooves 130 are joined together.

### (Inner Side Second Rib)

Sipes 140 and narrow grooves 142 are disposed alternatingly at intervals in the tire circumferential direction in the inner side second rib 114.

The sipes 140 have a narrow groove width such that they do close up when the top tread 18 is in contact with the ground, in other words, a groove width such that one groove wall surface and another groove wall surface that are mutually facing each other do come into mutual contact with each other. One end portion of the sipes 140 is connected to the third circumferential direction groove 104, while another end portion thereof is connected to the fourth circumferential direction groove 106. In other words, the sipes 140 cut right across the inner side second rib 114 in the tire width direction.

The sipes 140 are inclined relative to the tire width direction such that an end portion thereof on the outer side in the vehicle width direction is closer to the side in the direction indicated by the arrow A than an end portion thereof on the inner side in the vehicle width direction. In other words, the sipes 140 slope upwards on the left side thereof when looked at in a tread plan view. The angle of inclination of the sipes 140 relative to the tire width direction is 45° or less. The sipes 140 of the present exemplary embodiment are formed shallower than the first circumferential direction groove 100, the second circumferential direction groove 102, the third circumferential direction groove 104, and the fourth circumferential direction groove 106.

Both end portions of the narrow grooves 142 terminate within the inner side second ribs 114. Two narrow grooves 142 are disposed apart from each other on a straight line between one sipe 140 and another sipe 140. These two narrow grooves 142 are formed in parallel with the sipes 140.

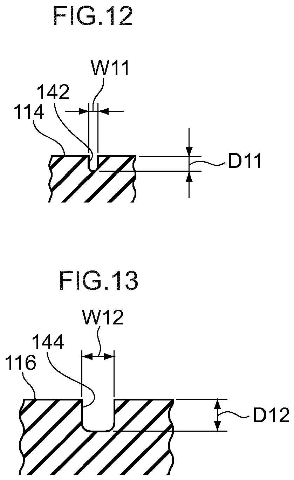

As is shown in FIG. 12, a cross-section taken in a perpendicular direction relative to the longitudinal direction of the narrow grooves 142 exhibits a substantially U-shaped configuration. A groove width W11 of the narrow grooves 142 is narrower than the first circumferential direction groove 100, the second circumferential direction groove 102, the third circumferential direction groove 104, and the fourth circumferential direction groove 106, and it is preferable that the narrow grooves 142 have a sufficiently wide groove width that they do not close up when the top tread 18 is in contact with the ground, in other words, a sufficiently wide groove width that one groove wall surface and another groove wall surface that are mutually facing each other do not come into mutual contact with each other.

A groove depth D11 of the narrow grooves 142 is preferably formed shallower than the groove depths of the first circumferential direction groove 100, the second circumferential direction groove 102, the third circumferential direction groove 104, and the fourth circumferential direction groove 106. The narrow grooves 142 of the present exemplary embodiment have a length of 8.5 mm, a groove width W11 of 1 mm, and a groove depth D11 of 2 mm. Note that these narrow grooves 142 are reduced compression rigidity portions.

### Inner Side Shoulder Rib)

Inner side width direction grooves 144 and sipes 146 are formed at intervals and alternatingly in the tire circumferential direction in the inner side shoulder rib 116.

An end portion on the outer side in the vehicle width direction of the inner side width direction grooves 144 is positioned further to the outer side in the vehicle width direction than the ground contact end 18E of the top tread 18, and terminates within the inner side shoulder rib 116 in the vicinity of the fourth circumferential direction groove 106. Additionally, an end portion on the inner side in the vehicle width direction of the inner side width direction grooves 144 is positioned further to the inner side in the vehicle width direction than the ground contact end 18E.

The inner side width direction grooves 144 are inclined relative to the tire width direction such that an end portion thereof on the outer side in the vehicle width direction is closer to the side in the direction indicated by the arrow A than an end portion thereof on the inner side in the vehicle width direction. In other words, the inner side width direction grooves 144 slope upwards on the left side thereof when looked at in a top tread plan view. Note that in the present exemplary embodiment, a groove width center line of the inner side width direction grooves 144 is inclined at 45° or less relative to the tire width direction.

As is shown in FIG. 13, a cross-section taken in a perpendicular direction relative to the longitudinal direction of the inner side width direction grooves 144 exhibits a substantially U-shaped configuration. A groove width W12 of the inner side width direction grooves 144 is narrower than the first circumferential direction groove 100, the second circumferential direction groove 102, the third circumferential direction groove 104, and the fourth circumferential direction groove 106, and the inner side width direction grooves 144 have a sufficiently wide groove width that they do not close up when the top tread 18 is in contact with the ground, in other words, have a sufficiently wide groove width that one groove wall surface and another groove wall surface that are mutually facing each other do not come into mutual contact with each other.

A groove depth D12 of the inner side width direction grooves 144 is shallower than the groove depths of the first circumferential direction groove 100, the second circumferential direction groove 102, the third circumferential direction groove 104, and the fourth circumferential direction groove 106. The groove width W12 of the inner side width direction grooves 144 of the present exemplary embodiment is 3.8 mm, while the groove depth D12 thereof is 5.2 mm.

Here, an aperture surface area of a single inner side width direction groove 144 is 0.02% or less relative to the surface area of the tire outer circumferential surface between one ground contact end 18E and the other ground contact end 18E, which is the surface area of the outer circumferential surface of the top tread 18 that is capable of being in contact with the road surface, in other words, a surface area obtained by multiplying the ground contact width TW of the top tread 18 by the length in the circumferential direction (in other words, the circumferential length) of the top tread 18 of one circumferential portion of a tire (in other words, of the entire circumference).

Note that the aperture surface area of a single inner side width direction groove 144 is 1.5% or less relative to the ground contact surface area of the top tread 18, in other words, relative to the surface area of the portion of the top tread 18 that is in actual contact with the road surface.

Furthermore, in the region where the belt layer 14 is disposed, in other words, in a region between one end portion 14E in the tire width direction of the belt layer 14 and the other end portion 14E thereof, it is preferable that an aperture surface area that is occupied by a single inner side width direction groove 144 out of the surface area of a region obtained when all of the inner side width direction grooves 144 project in the tire circumferential direction, in other words, of an inner side width direction groove placement region A2 which is between an end portion 14E of the belt layer 14 and a virtual line FL2 extending in the tire circumferential direction and passing through an end portion of that particular first inner side width direction groove 144 out of all of the first inner side width direction grooves 144 that is positioned closest to the tire equatorial plane CL side (i.e., a length on the outer circumferential surface of the top tread 18 measured in the tire width direction from an end portion 14E of the belt layer 14 to an end portion on the tire equatorial plane CL side of the inner side width direction groove 144 multiplied by a length in the tire circumferential direction of the outer circumferential surface of the top tread 18 of one circumferential portion of a tire (in other words, the circumferential length)) is not more than 1.5%.

Note that the aperture surface area occupied by a single inner side width direction groove 144 out of the surface area of the inner side width direction groove placement region A2 of the ground contact surface of the top tread 18 is 5% or less.

Moreover, within the range of the ground contact width TW of the top tread 18, it is preferable that a length L2 of the inner side width direction grooves 144, as measured in the tire width direction, be set within a range of 10 to 20% relative to the ground contact width TW.

It is also preferable that a ratio of the groove width of the inner side width direction grooves 144 (i.e., an average value thereof) relative to the pitch of the inner side width direction grooves 144in the tire circumferential direction, in other words, a ratio of the groove width of the inner side width direction grooves 144 (i.e., an average value thereof) relative to a distance measured in the tire circumferential direction between a groove width center line of one inner side width direction groove 144 and a groove width center line of another inner side width direction groove 144 that are mutually adjacent to each other in the tire circumferential direction is within a range of 8 to 15%.

The sipes 146 have a narrow groove width such that they do close up when the top tread 18 is in contact with the ground, in other words, have a groove width such that one groove wall surface and another groove wall surface that are mutually facing each other do come into mutual contact with each other. The sipes 146 are formed in parallel with the inner side width direction grooves 144, and one end portion thereof is connected to the fourth circumferential direction groove 106, while another end portion thereof is positioned further to the inner side in the vehicle width direction than the ground contact end 18E of the top tread 18. In other words, the sipes 146 cut across the inner side shoulder rib 116 in the tire width direction within the ground contact surface of the top tread 18. Note that the sipes 146 are placed on a virtual extension of the sipes 140 of the inner side second rib 114.

Note that, in the present exemplary embodiment, reduced compression rigidity portions (i.e., the pin sipes 122, the shallow grooves 126, and the narrow grooves 142) are provided at the outer side shoulder rib 108, the outer side second rib 110, and the inner side second rib 114 (excluding the center rib 112) that are disposed at the outer side in the tire radial direction of the bonding component 30 that bonds one tire piece 12A of the tire frame member 12 to another tire piece 12A thereof.

The tire 10 of the present exemplary embodiment is manufactured by placing the belt layer 14, the belt upper reinforcing layer 15, and the side reinforcing layers 13 on the outer surface of the previously molded tire frame member 12, and then further placing on the outer surface thereof unvulcanized rubber that will later become the side treads 16 and the top tread 18 so as to form a green tire. This green tire is then loaded into a vulcanizing mold, and undergoes vulcanization molding.

### (Operation and Effects)

In the tire 10 of the present exemplary embodiment, the aperture surface area of a single first width direction groove 118 is 0.02% or less relative to the surface area of the total ground contact surface of the top tread 18. Additionally, the aperture surface area per each first width direction groove 118 within the ground contact surface of the top tread 18 is 1.5% or less relative to the surface area of the ground contact surface of the top tread 18.

Because of this, during the vulcanization molding, the extent to which the belt layer 14 is warped by pressing force from the projections on the mold that is used to form the first width direction grooves 118 can be reduced in the tire circumferential direction. As a result, the extent to which the crown portion 24 of the tire frame member 12 which is adjacent to the belt layer 14 is warped can also be reduced in the tire circumferential direction.

Furthermore, in the tire 10 of the present exemplary embodiment, in the first width direction groove placement region A1 where the first width direction grooves 118 are placed, because the aperture surface area occupied by each first width direction groove 118 out of the surface area of the first width direction groove placement region A1 is 5% or less, it is possible to reduce the extent over which the portions on the outer side in the vehicle width direction of the crown portion 24 of the tire frame member 12 are warped to an even greater degree in the tire circumferential direction.

Note that because the angle of the groove width center line of the first width direction grooves 118 relative to the tire width direction is 45° or less, not only can rigidity in the tire width direction be ensured in land portions between one first width direction groove 118 and another first width direction groove 118 of the outer side shoulder rib 108, but the water discharge performance in the tire width direction is also improved.

Because the minimum value of the length L1 of the first width direction grooves 118 within the ground contact surface area, as measured in a direction extending in the tire width direction, is 5 % relative to the ground contact width TW of the top tread 18, it is possible to guarantee a water discharge performance in the tire width direction in peripheral regions relative to the first width direction grooves 118 of the outer side shoulder rib 108. Note that, in order to ensure that deformation of the tire frame member 12 does not extend over a wide range, it is preferable that the maximum value of the length of the first width direction grooves 118, as measured in a direction extending in the tire width direction, relative to the ground contact width TW be 20%.

In the tire 10 of the present exemplary embodiment, the aperture surface area of a single inner side width direction groove 144 relative to the surface area of the total ground contact surface of the top tread 18 is 0.02% or less. Additionally, the aperture surface area per one inner side width direction groove 144 within the ground contact surface of the top tread 18 relative to the surface area of the ground contact surface of the top tread 18 is 1.5% or less.

Because of this, during vulcanization molding, the extent to which the belt layer 14 is warped by projections on the mold that is used to form the inner side width direction grooves 144 can be reduced in the tire circumferential direction. As a result, the extent to which the crown portion 24 of the tire frame member 12 adjacent to the belt layer 14 is warped can also be reduced in the tire circumferential direction.

Furthermore, in the tire 10 of the present exemplary embodiment, in the inner side width direction groove placement region A2 where the inner side width direction grooves are placed, because the aperture surface area occupied by one inner side width direction groove 144 out of the surface area of the inner side width direction groove placement region A2 is 5% or less, the extent of the warping of the inner side portions in the vehicle width direction of the crown portion 24 of the tire frame member 12 can be reduced even further in the tire circumferential direction.

Note that because the angle of the groove width center line of the inner side width directions grooves 144 relative to the tire width direction is 45° or less, not only is it possible to ensure rigidity in the tire width direction in the land portions between one inner side width direction groove 144 and another inner side width direction groove 144 of the inner side shoulder rib 116, but the water discharge performance in the wire width direction can also be ensured.

Because the minimum value of the length L2 of the inner side width direction grooves 144 within the ground contact surface, as measured in a direction extending in the tire width direction, relative to the ground contact width TW of the top tread 18 is 10%, it is possible to ensure the water discharge performance in the tire width direction in peripheral regions relative to the inner side width direction grooves 144 of the inner side shoulder rib 116. Note that, in order to ensure that deformation of the tire frame member 12 does not extend over a wide range, it is preferable that the maximum value of the length of the inner side width direction grooves 144, as measured in a direction extending in the tire width direction, relative to the ground contact width TW be 20%.

In the tire 10 of the present exemplary embodiment, the first circumferential direction groove 100, the second circumferential direction groove 102, the third circumferential direction groove 104, and the fourth circumferential direction groove 106 are formed in the top tread 18, and these grooves function as water discharge main grooves that discharge water lying between the top tread 18 and the road surface to the outside of the tire ground contact surface when the vehicle is running on a wet road surface.

The outer side shoulder rib 108, the outer side second rib 110, the center rib 112, the inner side second rib 114, and the inner side shoulder rib 116 that serve as land portions are partitioned in the top tread 118 by the first circumferential direction groove 100, the second circumferential direction groove 102, the third circumferential direction groove 104, and the fourth circumferential direction groove 106.

The plural first width direction grooves 118 and sipes 120 are formed at intervals in the tire circumferential direction in the outer side shoulder rib 108, and cause the rigidity of the outer side shoulder rib 108 in the tire circumferential direction, as well as the rigidity thereof in the tire width direction to be moderately reduced. Additionally, when running on a wet road surface, water located between the outer side shoulder rib 108 and the road surface can be discharged to the outside of the tire by the first width direction grooves 118.

The plural pin sipes 122 are formed in parallel with the first width direction grooves 118 in the block-shaped portions between one first width direction groove 118 and another first width direction groove 118 of the outer side shoulder rib 108, and the compression rigidity of those block-shaped portions is thereby reduced.

As a result of the compression rigidity of the outer side shoulder rib 108 being reduced in this manner, it becomes difficult for vibration in the outer side shoulder rib 108 to be transmitted to the vehicle via the tire frame member 12, so that both noise and ride comfort are improved.

The plural non-transverse sipes 124 are formed at intervals in the tire circumferential direction in the outer side second rib 110, and cause the rigidity of the outer side second rib 110 in the tire circumferential direction, as well as the rigidity thereof in the tire width direction to be moderately reduced.

The shallow grooves 126 are formed in the block-shaped portions between one non-transverse sipe 124 and another non-transverse sipe 124 in the outer side second rib 110, and these cause the compression rigidity of these block-shaped portions to be reduced. As a result of the compression rigidity of the outer side second rib 110 being reduced in this manner, it becomes difficult for vibration in the outer side second rib 110 to be transmitted to the vehicle via the tire frame member 12, so that both noise and ride comfort are improved. Note that because both end portions of the shallow grooves 126 terminate within the rib of the outer side second rib 110 and do not cut right across the outer side second rib 110 in the tire width direction, there is no concern that the rigidity of the outer side second rib 110 in the tire width direction, or the rigidity thereof in the circumferential direction will be unnecessarily reduced.

The plural first inclined grooves 128 and second inclined grooves 130 are disposed alternatingly and at intervals in the tire circumferential direction in the center rib 112, and these cause the rigidity of the center rib 112 in the tire circumferential direction, as well as the rigidity thereof in the tire width direction to be moderately reduced. Additionally, when running on a wet road surface, water located between the center rib 112 and the road surface can be discharged to the second circumferential direction groove 102 by the first inclined grooves 128 and second inclined grooves 130.

The plural sipes 140 are formed at intervals in the tire circumferential direction in the inner side second rib 114, and cause the rigidity of the inner side second rib 114 in the tire circumferential direction, as well as the rigidity thereof in the tire width direction to be moderately reduced.

The narrow grooves 142 are formed in the block-shaped portions between one sipe 140 and another sipe 140 of the inner side shoulder rib 114, and cause the compression rigidity of those block-shaped portions to be reduced.

As a result of the compression rigidity of the inner side second rib 114 being reduced in this manner, it becomes difficult for vibration in the inner side second rib 114 to be transmitted to the vehicle via the tire frame member 12, so that both noise and ride comfort are improved.

The inner side width direction grooves 144 and sipes 146 are formed at intervals and alternatingly in the tire circumferential direction in the inner side shoulder rib 116, and these cause the rigidity of the inner side shoulder rib 116 in the tire circumferential direction, as well as the rigidity thereof in the tire width direction to be moderately reduced. Additionally, when running on a wet road surface, water located between the inner side shoulder rib 116 and the road surface can be discharged to the outside of the tire by the inner side width direction grooves 144.

In this way, in the tire 10 of the present exemplary embodiment, because the pin sipes 122, the shallow grooves 126, and the narrow grooves 124 that serve as reduced compression rigidity portions are provided at parts of the land portions where the compression rigidity is high, the compression rigidity of these high-compression rigidity portions is reduced, and it becomes difficult for vibration in the land portions to be transmitted to the vehicle via the tire frame member 12, so that both noise and ride comfort are improved.

Note that in the tire 10 of the present exemplary embodiment, reduced compression rigidity portions are not provided at the center rib 112 or the inner side shoulder rib 116, however, it is also possible for the pin sipes 122, the shallow grooves 126, and the narrow grooves 24 to be provided at these ribs as well.

### [Other Exemplary Embodiments]

An exemplary embodiment of the present disclosure has been described above, however, the present disclosure is not limited to this exemplary embodiment and it is to be understood that various further modifications and the like may be made thereto insofar as they do not depart from the spirit or scope of the present disclosure.

In the above-described exemplary embodiment, in the first width direction groove placement region A1 where the first width direction grooves 118 are placed, the aperture surface area occupied by one first width direction groove 118 out of the surface area of the first width direction groove placement region A1 is 5% or less, however, it is also possible, in some cases, for this to not be 5% or less.

In the above-described exemplary embodiment, the minimum value of the length L1 of the first width direction grooves 118, as measured in a direction extending in the tire width direction, is 5% or less relative to the ground contact width TW of the top tread 18, however, it is also possible, in some cases, for this minimum value to not be 5% or less.

In the above-described exemplary embodiment, in the inner side width direction groove placement region A2 where the inner side width direction grooves 144 are placed, the aperture surface area occupied by one inner side width direction groove 144 out of the surface area of the inner side width direction groove placement region A2 is 5% or less, however, it is also possible, in some cases, for this to not be 5% or less.

In the above-described exemplary embodiment, the minimum value of the length L2 of the inner side width direction grooves 144, as measured in a direction extending in the tire width direction, is 10% or less relative to the ground contact width TW of the top tread 18, however, it is also possible, in some cases, for this minimum value to not be 10% or less.

The tread pattern of the top tread 18 of the tire 10 of the above-described exemplary embodiment is a rib pattern, however, it may instead be a block pattern. In the case of a block pattern, priority may be given to providing reduced compression rigidity portions in high-rigidity blocks.

In the tire 10 of the above-described exemplary embodiment, the reduced compression rigidity portions, in other words, the means used to obtain reduced compression rigidity were in the form of the pin sipes 122, the shallow grooves 126, and the narrow grooves 142, however, it is sufficient if the reduced compression rigidity portions are recessed structures that enable the rigidity of the land portions to be reduced, and forms other than the pin sipes 122, the shallow grooves 126, and the narrow grooves 142 may also be employed.

The above-described placement positions and placement numbers of the pin sipes 122, the shallow grooves 126, and the narrow grooves 142 are not limited to those in the above-described exemplary embodiment, and may be altered as is appropriate.

The pin sipes 122 of the above-described exemplary embodiment were formed in the shape of circular holes, however, they may also be formed as triangular, rectangular, polygonal, or elliptical holes. Additionally, the shallow grooves 126 and the narrow grooves 142 of the present exemplary embodiment were placed in a straight line in the longitudinal direction and formed to a uniform depth and at a uniform width, however, it is also possible to change the groove depth and the groove width, and for them to be placed in a curved line in the longitudinal direction.

When the reduced compression rigidity portions are formed by shallow grooves and narrow grooves, it is preferable that they do not communicate with the main grooves partitioning the land portions. The reason for this is that if the shallow grooves and narrow grooves do communicate with the main grooves partitioning the land portions, there is a concern that the rigidity of the land portions in the tire direction, as well as the rigidity thereof in the tire circumferential direction will be reduced.

## Claims

1. A tire (10) comprising:
a tire frame member (12) that is formed from a thermoplastic resin material, and that has side portions (22) that extend towards an outer side in a tire radial direction (R) from a bead portion (20), and a crown portion (24) that extends towards an inner side in a tire width direction (W) from the side portions (22);
a reinforcing layer (14) that is disposed at an outer side in the tire radial direction (R) of the tire frame member (12), and that has a higher bending rigidity than outer circumferential portions of the tire frame member (12); and
a tread (18) that is formed from a rubber material and is disposed on the outer side in the tire radial direction (R) of the reinforcing layer (14); **characterised in that**:
a plurality of width direction grooves (118, 144) are provided at the tread (18) at intervals in a tire circumferential direction (A), and extend in the tire width direction (W) in which mutually facing groove wall surfaces of width direction grooves (118, 144) do not make contact with each other when the tread (18) is in contact with the ground,
wherein an aperture surface area of one of the width direction grooves (118, 144) within a total ground contact surface of the tread (18) of one circumferential portion of the tire (10) is 0.02% or less relative to a surface area of a total ground contact surface of the tread (18) of one circumferential portion of the tire (10), the total ground contact surface being a surface area obtained by multiplying the ground contact width (TW) of the tread (18), measured as described herein, by the length in the circumferential direction of the tread (18) of one circumferential portion of the tire.

2. The tire (10) according to claim 1, wherein, in the region of the tread (18) where the reinforcing layer (14) is disposed, in a width direction groove placement region (Al) which is obtained when all of the plurality of width direction grooves (118, 144) that are provided at intervals from each other in the tire circumferential direction (A) project in the tire circumferential direction (A), an aperture surface area that is occupied by a single width direction groove (118, 144) is 1.5% or less of a surface area of the width direction groove placement region (A1, A2).

3. The tire (10) according to claim 1 or 2, wherein an angle of a groove width center line of the width direction grooves (118, 144) is 45° or less relative to the tire width direction (W).

4. The tire (10) according to any one of claims 1 through 3, wherein, within a ground contact surface of the tread (18), a minimum value of a length (L1, L2) of the width direction grooves (118, 144), as measured in a direction extending in the tire width direction (W), is 1.5% relative to a ground contact width (TW) of the tread (18).

5. The tire (10) according to any one of claims 1 through 4, further comprising:
a plurality of land portions (108, 110, 112, 114, 116) that are provided at the tread (18), and that are partitioned by main grooves (100, 102, 104, 106) that extend in the tire circumferential direction (A); and
reduced compression rigidity portions (122, 126, 142) that are provided as recessed portions in the land portions (108, 110, 112, 114, 116), and that cause a compression rigidity of the land portions (108, 110, 112, 114, 116) to be reduced.

6. The tire (10) according to claim 5, wherein:
the plurality of land portions (108, 110, 112, 114, 116) are provided with a shoulder rib (108) that is positioned at an outermost side in a vehicle width direction when the tire (10) is fitted onto a vehicle, and that extends in the tire circumferential direction (A),
a plurality of lug grooves that extend in the tire width direction (W) are provided at intervals in the tire circumferential direction (A) in the shoulder rib (108), and
the reduced compression rigidity portions (122) are provided between one of the lug grooves and one of the lug grooves in the shoulder rib (108).

7. The tire (10) according to claim 6, wherein the reduced compression rigidity portions (122) that are formed in the shoulder rib (108) are hole-shaped pin sipes (122), and a plurality of reduced compression rigidity portions (126) are formed extending along the lug grooves, and whose maximum radial dimension (D7) is smaller than a minimum groove width dimension of the main grooves (100, 102, 104, 106) and a minimum groove width dimension of the lug grooves.

8. The tire (10) according to claim 6 or 7, wherein:
the plurality of land portions (108, 110, 112, 114, 116) are provided with an outer side second rib (110) that extends in the tire circumferential direction (A) adjacently to an inner side in the vehicle width direction when the tire (10) is fitted onto a vehicle,
a plurality of non-transverse sipes (124) that are formed so as to include a pair of width direction sipe portions (124A, 124C) that extend towards an inner side in the vehicle width direction from a main groove (100) between the shoulder rib (108) and the outer side second rib (110) and terminate within the rib (110), and a circumferential direction sipe portion (124B) that joins together end portions on the inner side in the vehicle width direction of the pair of width direction sipe portions (124A, 124C) are provided at intervals in the tire circumferential direction (A) in the outer side second rib (110), and
the reduced compression rigidity portions (126) that are provided between one of the non-transverse sipes (124A) and another one of the non-transverse sipes (124C) are shallow grooves (126) whose groove depth is shallower than that of the main grooves (100, 102, 104, 106), and whose two end portions terminate within a rib (110).

## Patentansprüche

1. Reifen (10), der Folgendes umfasst:
ein Reifengerüstelement (12), das aus einem thermoplastischen Harzwerkstoff geformt ist und das Seitenabschnitte (22), die sich von einem Wulstabschnitt (20) aus zu einer in einer Reifenradialrichtung (R) äußeren Seite hin erstrecken, und einen Scheitelabschnitt (24), der sich von den Seitenabschnitten (22) aus zu einer in einer Reifenbreitenrichtung (W) inneren Seite hin erstreckt, aufweist,
eine Verstärkungslage (14), die an einer in der Reifenradialrichtung (R) äußeren Seite des Reifengerüstelements (12) angeordnet ist und eine höhere Biegesteifigkeit aufweist als äußere Umfangsabschnitte des Reifengerüstelements (12), und
eine Lauffläche (18), die aus einem Gummiwerkstoff geformt ist und auf der in der Reifenradialrichtung (R) äußeren Seite der Verstärkungslage (14) angeordnet ist, **dadurch gekennzeichnet, dass**:
mehrere Breitenrichtungsrillen (118, 144) an der Lauffläche (18) in Abständen in einer Reifenumfangsrichtung (A) bereitgestellt werden und sich in der Reifenbreitenrichtung (W) erstrecken, in der einander gegenüberliegende Rillenwandflächen der Breitenrichtungsrillen (118, 144) keine Berührung miteinander herstellen, wenn sich die Lauffläche (18) in Berührung mit dem Boden befindet,
wobei ein Öffnungsoberflächeninhalt einer der Breitenrichtungsrillen (118, 144) innerhalb einer gesamten Bodenberührungsfläche der Lauffläche (18) eines umlaufenden Abschnitts des Reifens (10) 0,02 % oder weniger im Verhältnis zu einem Oberflächeninhalt einer gesamten Bodenberührungsfläche der Lauffläche (18) eines umlaufenden Abschnitts des Reifens (10) beträgt, wobei die gesamte Bodenberührungsfläche ein Oberflächeninhalt ist, erhalten durch Multiplizieren der Bodenberührungsbreite (TW) der Lauffläche (18), gemessen, wie hierin beschrieben, mit der Länge der Lauffläche (18) eines umlaufenden Abschnitts des Reifens in der Umfangsrichtung.

2. Reifen (10) nach Anspruch 1, wobei in dem Bereich der Lauffläche (18), wo die Verstärkungslage (14) bereitgestellt wird, in einem Breitenrichtungsrillen-Platzierungsbereich (A1), der erhalten wird, wenn alle der mehreren Breitenrichtungsrillen (118, 144), die in Abständen voneinander in der Reifenumfangsrichtung (A) bereitgestellt werden, in der Reifenumfangsrichtung (A) vorspringen, ein Öffnungsflächeninhalt, der durch eine einzelne Breitenrichtungsrille (118, 144) eingenommen wird, 1,5 % oder weniger eines Oberflächeninhalts des Breitenrichtungsrillen-Platzierungsbereichs (A1, A2) beträgt.

3. Reifen (10) nach Anspruch 1 oder 2, wobei ein Winkel einer Rillenbreiten-Mittellinie der Breitenrichtungsrillen (118, 144) 45° oder weniger in Bezug auf die Reifenbreitenrichtung (W)beträgt.

4. Reifen (10) nach einem der Ansprüche 1 bis 3, wobei innerhalb einer Bodenberührungsfläche der Lauffläche (18) ein minimaler Wert einer Länge (L1, L2) der Breitenrichtungsrillen (118, 144), gemessen in einer Richtung, die sich in der Reifenbreitenrichtung (W) erstreckt, 1,5 % im Verhältnis zu einer Bodenberührungsbreite (TW) der Lauffläche (18) beträgt.

5. Reifen (10) nach einem der Ansprüche 1 bis 4, der ferner Folgendes umfasst:
mehrere Stegabschnitte (108, 110, 112, 114, 116), die an der Lauffläche (18) bereitgestellt werden und die durch Hauptrillen (100, 102, 104, 106) unterteilt werden, die sich in der Reifenumfangsrichtung (A) erstrecken, und
Abschnitte (122, 126, 142) mit verringerter Drucksteifigkeit, die als ausgesparte Abschnitte in den Stegabschnitten (108, 110, 112, 114, 116) bereitgestellt werden und die bewirken, dass eine Drucksteifigkeit der Stegabschnitte (108, 110, 112, 114, 116) verringert wird.

6. Reifen (10) nach Anspruch 5, wobei:
die mehreren Stegabschnitte (108, 110, 112, 114, 116) mit einer Schulterrippe (108) versehen sind, der an einer in einer Fahrzeugbreitenrichtung äußersten Seite angeordnet ist, wenn der Reifen (10) an einem Fahrzeug angebracht ist, und der sich in der Reifenumfangsrichtung (A) erstreckt,
mehrere Stollenrillen, die sich in der Reifenbreitenrichtung (W) erstrecken, in Abständen in der Reifenumfangsrichtung (A) in der Schulterrippe (108) bereitgestellt werden und
die Abschnitte (122) mit verringerter Drucksteifigkeit zwischen einer der Stollenrillen und einer der Stollenrillen in der Schulterrippe (108) bereitgestellt werden.

7. Reifen (10) nach Anspruch 6, wobei die Abschnitte (122) mit verringerter Drucksteifigkeit, die in der Schulterrippe (108) geformt sind, lochförmige Stiftlamellen (122) sind und mehrere Abschnitte (126) mit verringerter Drucksteifigkeit geformt sind, die sich entlang der Stollenrillen erstrecken und deren maximale radiale Abmessung (D7) kleiner ist als eine minimale Rillenbreitenabmessung der Hauptrillen (100, 102, 104, 106) und eine minimale Rillenbreitenabmessung der Stollenrillen.

8. Reifen (10) nach Anspruch 6 oder 7, wobei:
die mehreren Stegabschnitte (108, 110, 112, 114, 116) mit einer zweiten Außenseitenrippe (110) versehen sind, die sich in der Reifenumfangsrichtung (A) angrenzend an eine in der Fahrzeugbreitenrichtung innere Seite erstreckt, wenn der Reifen (10) an einem Fahrzeug angebracht ist,
mehrere nicht quer verlaufende Lamellen (124), die so geformt sind, dass sie ein Paar von Lamellenabschnitten (124A, 124C) in Breitenrichtung, die sich zu einer in der Fahrzeugbreitenrichtung inneren Seite hin von einer Hauptrille (100) aus zwischen der Schulterrippe (108) und der zweiten Außenseitenrippe (110) erstrecken und innerhalb der Rippe (110) enden, und einen Lamellenabschnitt (124B) in Umfangsrichtung, der Endabschnitte auf der in der Fahrzeugbreitenrichtung inneren Seite des Paares von Lamellenabschnitten (124A, 124C) miteinander verbindet, einschließen, in Abständen in der Reifenumfangsrichtung (A) in der zweiten Außenseitenrippe (110) bereitgestellt werden, und
die Abschnitte (126) mit verringerter Drucksteifigkeit, die zwischen einer der nicht quer verlaufenden Lamellen (124A) und einer anderen der nicht quer verlaufenden Lamellen (124B) flache Rillen (126) sind, deren Rillentiefe flacher ist als diejenige der Hauptrillen (100, 102, 104, 106) und deren zwei Endabschnitte innerhalb einer Rippe (110) enden.

## Revendications

1. Bandage pneumatique (10), comprenant :
un élément de cadre du bandage pneumatique (12) formé à partir d'un matériau de résine thermoplastique, et comportant des parties de flanc (22) s'étendant vers un côté externe, dans une direction radiale du bandage pneumatique (R), à partir d'une partie de talon (20), et une partie de sommet (24) s'étendant vers un côté interne, dans une direction de la largeur du bandage pneumatique (W), à partir des parties de flanc (22) ;
une couche de renforcement (14) disposée au niveau d'un côté externe, dans la direction radiale du bandage pneumatique (R), de l'élément de cadre du bandage pneumatique (12) et présentant une rigidité à la flexion supérieure à celle de parties circonférentielles externes de l'élément de cadre du bandage pneumatique (12) ; et-
une bande de roulement (18) composée d'un matériau de caoutchouc et disposée sur le côté externe, dans la direction radiale du bandage pneumatique (R), de la couche de renforcement (14) ; **caractérisé en ce que** :
plusieurs rainures dans la direction de la largeur (118, 144) sont formées au niveau de la bande de roulement (18), à des intervalles dans une direction circonférentielle du bandage pneumatique (A), et s'étendent dans la direction de la largeur du bandage pneumatique (W), des surfaces de paroi de rainure des rainures dans la direction de la largeur (118, 144) se faisant mutuellement face ne se contactant pas mutuellement, lorsque la bande de roulement (18) est en contact avec le sol ;
dans lequel une aire de surface d'ouverture de l'une des rainures dans la direction de la largeur (118, 144), dans une surface de contact au sol totale de la bande de roulement (18) d'une partie circonférentielle du bandage pneumatique (10), représente 0,02% ou moins d'une aire de surface d'une surface de contact au sol totale de la bande de roulement (18) d'une partie circonférentielle du bandage pneumatique (10), la surface de contact au sol totale étant une aire de surface obtenue en multipliant la largeur de contact au sol (TW) de la bande de roulement (18), mesurée comme décrit, par la longueur, dans la direction circonférentielle de la bande de roulement (18), d'une partie circonférentielle du bandage pneumatique

2. Bandage pneumatique (10) selon la revendication 1, dans lequel, dans la région de la bande de roulement (18) où est disposée la couche de renforcement (14), dans une région de disposition des rainures, (Al) dans la direction de la largeur, établie lorsque l'ensemble des plusieurs rainures dans la direction de la largeur (118, 144) agencées à des intervalles les unes des autres, dans la direction circonférentielle du bandage pneumatique (A), débordent dans la direction circonférentielle du bandage pneumatique (A), une aire de surface d'ouverture occupée par une seule rainure dans la direction de la largeur (118, 144) représentant 1,5% ou moins d'une aire de surface de la région de disposition des rainures dans la direction de la largeur (A1, A2).

3. Bandage pneumatique (10) selon les revendications 1 ou 2, dans lequel un angle d'une ligne centrale de la largeur de rainure des rainures dans la direction de la largeur (118, 144) correspond à 45° ou moins par rapport à la direction de la largeur du bandage pneumatique (W).

4. Bandage pneumatique (10) selon l'une quelconque des revendications 1 à 3, dans lequel, dans une surface de contact au sol de la bande de roulement (18), une valeur minimale d'une longueur (L1, L2) des rainures dans la direction de la largeur (118, 144), mesurée dans une direction s'étendant dans la direction de la largeur du bandage pneumatique (W), représente 1,5% d'une largeur de contact au sol (TW) de la bande de roulement (18).

5. Bandage pneumatique (10) selon l'une quelconque des revendications 1 à 4, comprenant en outre :
plusieurs parties d'appui (108, 110, 112, 114, 116) agencées au niveau de la bande de roulement (18) et séparées par des rainures principales (100, 102, 104, 106) s'étendant dans la direction circonférentielle du bandage pneumatique (A) ; et
des parties à rigidité à la compression réduite (122, 126, 142) agencées sous forme de parties évidées dans les parties d'appui (108, 110, 112, 114, 116), et entraînant une réduction de la rigidité à la compression des parties d'appui (108, 110, 112, 114, 116).

6. Bandage pneumatique (10) selon la revendication 5, dans lequel :
les plusieurs parties d'appui (108, 110, 112, 114, 116) comportent une nervure d'épaulement (108) positionnée au niveau d'un côté externe extrême, dans une direction de la largeur du véhicule, lorsque le bandage pneumatique (10) est ajusté sur le véhicule, et s'étendent dans la direction circonférentielle du bandage pneumatique (A) ;
plusieurs rainures à barrettes s'étendant dans la direction de la largeur du bandage pneumatique (W) sont formées à des intervalles dans la direction circonférentielle du bandage pneumatique (A), dans la nervure d'épaulement (108) ; et
les parties à rigidité à la compression réduite (122) sont agencées entre l'une des rainures à barrettes et l'une des rainures à barrettes dans la nervure d'épaulement (108).

7. Bandage pneumatique (10) selon la revendication 6, dans lequel les parties à rigidité à la compression réduite (122) formées dans la nervure d'épaulement (108) sont des lamelles à broche en forme de trou (122), plusieurs parties à rigidité à la compression réduite (126) étant formées, s'étendant le long des rainures à barrettes, dont la dimension radiale maximale (D7) est inférieure à une dimension de largeur de rainure minimale des rainurées principales (100, 102, 104, 106) et à une dimension de largeur de rainure minimale des rainures à barrettes.

8. Bandage pneumatique (10) selon les revendications 6 ou 7, dans lequel :
les plusieurs parties d'appui (108, 110, 112, 114, 116) comportent une deuxième nervure du côté externe (110) s'étendant dans la direction circonférentielle du bandage pneumatique (A), de manière adjacente à un côté interne, dans la direction de la largeur du véhicule, lorsque le bandage pneumatique (10) est ajusté sur un véhicule ;
plusieurs lamelles non transversales (124) sont formées de sorte à inclure une paire de parties de lamelles dans la direction de la largeur (124A, 124C), s'étendant vers un côté interne, dans la direction de la largeur du véhicule, à partir d'une rainure principale (100) entre la nervure d'épaulement (108) et la deuxième nervure du côté externe (110) et se terminant dans la nervure (110), une partie de lamelle dans une direction circonférentielle (124B) reliant des parties d'extrémité sur le côté interne, dans la direction de la largeur du véhicule, de la paire de parties de lamelle dans la direction de la largeur (124A, 124C) étant agencées à des intervalles dans la direction circonférentielle du bandage pneumatique (10), dans la nervure du côté externe (110) ; et
les parties à rigidité à la compression réduite (126) agencées entre l'une des lamelles non transversales (124A) et une autre des lamelles non transversales (124) sont des rainures peu profondes (126) dont la profondeur de rainure est inférieure à celle des rainures principales (100, 102, 104, 106), et dont les deux parties d'extrémité se terminent à l'intérieur d'une nervure (110).
